# EUROPEAN PATENT APPLICATION

(11) **EP 1 727 393 A1**
(43) Date of publication of application: **29.11.2006**
(21) Application number: 05104406.3
(22) Date of filing: 24.05.2005
(51) Int. Cl.: H04R 25/00, G02C 11/06, H02J 7/02, H05K 5/00

(54) **Connector assembly for connecting an earpiece of a hearing aid to a glasses temple**

(71) Applicant: Varibel B.V., 6802 CB Arnhem (NL)
(72) Inventor: van der Zwan, Jacob, 3012 LD Rotterdam (NL); Sipkema, Marcus Karel, 6824 KH Arnhem (NL)
(74) Representative: van Westenbrugge, Andries

(57) **Abstract**

Connector assembly for connecting an earpiece (27) of a hearing aid to a glasses temple (13). The glasses temple (13) has hearing aid components. The connector assembly (31) has a first connector housing (34) and a second connector housing (37). The first connector housing (34) is designed to be attached to the earpiece (27) via an intermediate unit (29) whereas the second connector housing (37) is designed to be attached to the glasses temple (13). The first and second connector housings (34, 37) are designed to engage one another by means of a disconnectable connection.

## Description

### Field of the invention

The present invention relates to a connector assembly for connecting an earpiece of a hearing aid to a glasses temple.

### Prior art

Several types of hearing aid glasses have been proposed in the past, see e.g. EP-A-1025744, WO2004/028203, and prior art referred to in files relating to these documents. However, constructive design details as to how to manufacture one or more practical embodiments of such hearing aid glasses are not known from these prior art documents.

### Summary of the invention

The present invention is directed to several constructive details of hearing aid glasses and supporting equipment therefore. Several aspects of the invention have wider application than just hearing aid glasses as will become evident from the detailed description hereinafter.

In a first aspect, the invention relates to a connector assembly used to attach hearing aid glasses to an earpiece. The hearing aid glasses comprise electronics for the hearing aid. Sound, either as an acoustic or as an electrical signal, has to be directed from the glasses to a human ear through the use of an intermediate unit, e.g. a tube or cable attached to the earpiece. Existing hearing aid glasses have the disadvantage that the earpieces are difficult to put into the ear, as a turning movement of the earpieces is required during insertion, while the earpieces are tightly attached to the glasses. The same problem exists when taking the earpieces out. However in this case an extra risk exists, which is that the user takes off his/her glasses first without thinking about the attached earpieces. In such a case, at best an unpleasant pulling sensation is felt in the ear(s), and at worst the connection between earpiece and glasses breaks.

The objective of this aspect of the invention is to use a connector assembly that disconnects when the user puts off his/her glasses, and is easily connected by the user when he/she puts the glasses on.

To that end the invention provides a connector assembly for connecting an earpiece of a hearing aid to a glasses temple, the glasses temple comprising hearing aid components, the connector assembly comprising a first connector housing (34) and a second connector housing (37), the first connector housing (34) being designed to be attached to said earpiece (27) via an intermediate unit (29), the second connector housing (37) being designed to be attached to said glasses temple (13), the first and second connector housings (34, 37) being designed to engage one another by means of a disconnectable connection.

The advantages of this first aspect of the invention are that the insertion and extraction of the earpieces can now be done independently of putting off/on the glasses, as the glasses are not connected during insertion and extraction of the earpieces, and furthermore the risk of breakage of an intermediate unit in case of inadvertently putting off the glasses does not exist anymore.

In a second aspect, the invention is directed to a cradle set for charging a battery in a temple of glasses where the temples comprise electronic components that need power supply. Such glasses may be hearing aid glasses.

To that end, in its second aspect, the invention provides a cradle set comprising a transformer arranged to receive electrical power from a mains and transform said electrical power to battery charging power to charge a first chargeable battery and a cradle housing comprising at least a first opening, the first opening comprising a first electrical contact and a second electrical contact, the first opening being shaped to receive a rear side portion of a first glasses temple and the first and second electrical contacts being designed to contact electrical contacts on said rear side portion of said first glasses temple in order to provide said battery charging power to said first glasses temple.

Thus, a user of the hearing aid glasses can put off his/her glasses and insert the rear side portion of the glasses temple in the first opening and the battery in the glasses temple will be charged. This can be done overnight when the user is not wearing his/her glasses anyway.

Using rechargeable batteries in glasses with electronics has the advantage for the user of not needing to exchange batteries, which is the case when disposable batteries are used. Exchanging disposable batteries results in a substantial cost for the user, especially in the case of daily use. Moreover, exchanging small batteries is a difficult task, taking into account that the user is not wearing his/her glasses while exchanging. This is especially so in case the user is elderly, and has decreased motorial control (e.g., trembling fingers).

Rechargeable batteries however also have a disadvantage over disposable batteries in that they are substantial larger for the same power storage. The larger battery size could result in decreased attractiveness of the glasses. This aspect of the invention solves this issue in 2 ways:
1. In glasses with electronics with disposable batteries, for example hearing aid glasses, the power lifetime of a battery is between several days and several weeks. A battery power lifetime of less than several days is not deemed acceptable by users. As the glasses in this invention can be charged every night, the power lifetime of one charge operation of the battery only needs to be one day. This decreases the required size of the rechargeable battery to approximately the same size as a disposable battery in a comparable product.
2. The battery, being the largest electronics component in the glasses, is in this invention being placed at the rear end of the temple. On the head of a user this is the position behind the ear, which is the least visible place.

A further objective of the second aspect of this invention is that the cradle set can accommodate a wide range of glasses. Glasses measures (front widths, front heights, temple lengths, temple shapes) vary widely, because measures of people's heads vary and because glasses designs vary. Furthermore, temples also get bent around the ear and towards the head when the optician fits the glasses to the user's head, resulting in even more variations. And finally, glasses get deformed during use; temples and hinges are bent or deformed. Accommodating such a wide range of glasses variations with one cradle set is achieved in this aspect of the invention by using contact points at the rear ends of the temples. These can be seen as two points which can move substantially independently from each other when the temples are partially extended, because they can move up and down relative to each other (by turning the glasses around the main axis parallel to the extended temples), and towards and away from each other (by closing or fully extending the temples). Therefore these rear ends with contacts can always be positioned in the opening(s) of the cradle.

In a third aspect the invention relates to constructive details of a glasses temple comprising electronic components. Here, the objective is to better protect the electronic components from being damaged due to external influences, like bending of the glasses temple.

To that end, in the third aspect, the invention provides a glasses temple comprising a printed circuit board with electrical components, a temple housing and a metal plate, the temple housing accommodating both said printed circuit board and said metal plate, said metal plate being arranged to protect said printed circuit board with electrical components.

In a fourth aspect the invention relates to updating hearing aid programs of a processor arrangement in a hearing aid. Here, the objective is to provide a method, and means for performing such a method, to spread available updates of such hearing aid programs in an easy way, without requiring the hearing dispenser to actively take care of latest updates being available on his computer.

To that end, in the fourth aspect, the invention provides a method of updating a hearing aid, comprising:
a) providing a computer with a computer processor arranged to communicate with other telecommunication devices and storing a computer version of a hearing aid application program;
b) providing hearing aid glasses with a hearing aid processor arranged to communicate with other telecommunication devices and storing a hearing aid glasses version of said hearing aid application program;
c) setting up a communication between said computer processor and said hearing aid processor;
d) checking whether said hearing aid glasses version is a more recent version than said computer version of said hearing aid application program;
e) if said hearing aid glasses version is more recent than said computer version, transferring said hearing aid glasses version to said computer and to store said transferred hearing aid glasses version in said computer as an updated computer version;
f) if said computer version is more recent than said hearing aid glasses version, transferring said computer version to said hearing aid processor and to store said computer version in said hearing aid processor as updated hearing aid glasses version.

### Brief description of the drawings

The present invention will be explained in detail with reference to some drawings, which are only intended for illustrative purposes and not to limit the scope of the invention. The scope is defined by the annexed claims and its equivalents.
Figure 1 shows a charging cradle;
Figures 2a, 2b show a battery housing at a glasses temple;
Figures 3a, 3b show a cross sectional view of a glasses temple placed in the charging cradle along line III-III in figure 1;
Figure 3c shows a cross sectional view through the charging cradle along line IIIc-IIIc in figure 1;
Figure 4a-4f show different embodiments of a connector assembly for connecting an earpiece of a hearing aid to a glasses temple;
Figure 5 shows different parts arranged in a glasses temple;
Figure 6 shows some details of the connector assembly;
Figure 7 shows an operation button within a glasses temple;
Figure 8 shows a computer arrangement to be used in an aspect of the invention.

### Description of the preferred embodiment

The present invention comprises several aspects. They will be explained in detail below.

### Charging cradle / battery housing.

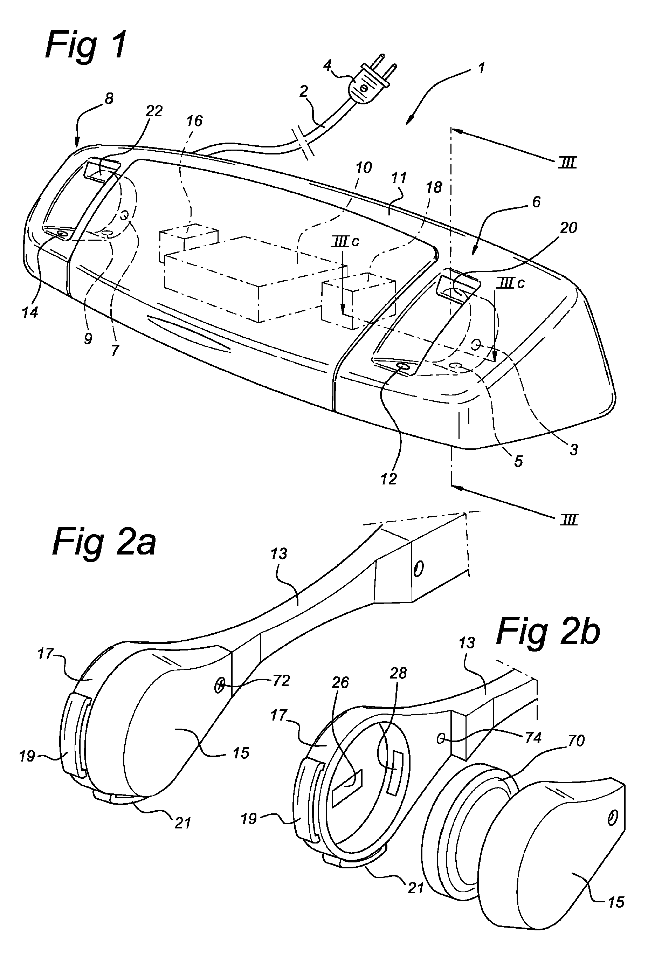

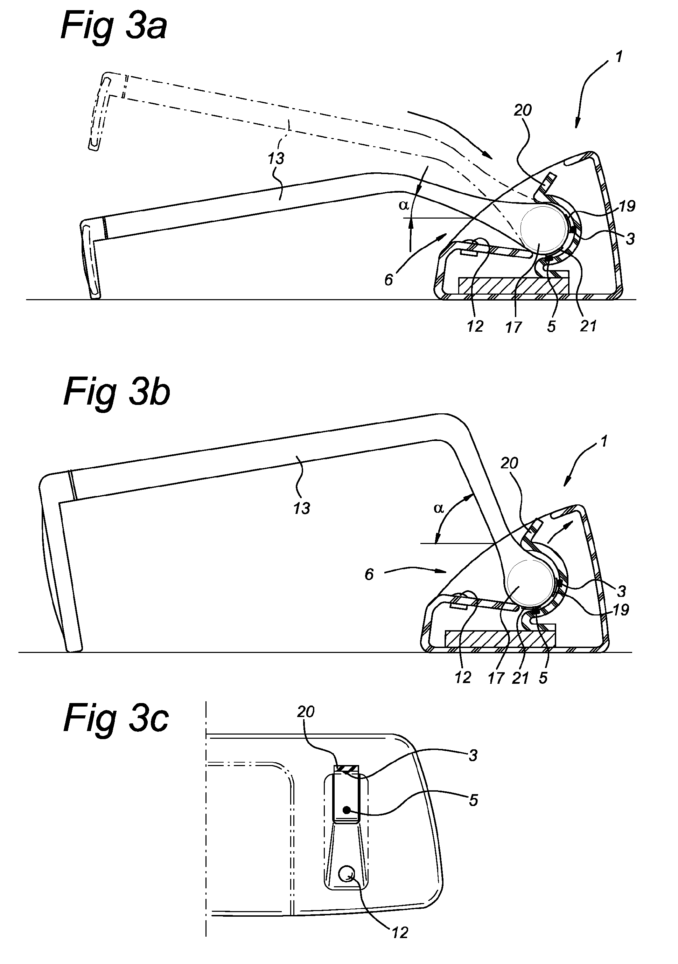

Figure 1 shows a charging cradle 1. The charging cradle 1 comprises a housing 11 preferably made of a suitable synthetic material. The charging cradle 1 comprises two openings 6, 8 each shaped to receive a rear side portion of a wide variety of glasses temples, as will be explained further below. Each of the openings 6, 8 comprises two distinct electrical contacts 3, 5, 7, 9. The electrical contacts 3, 5, 7, 9 are accommodated in pairs in two resilient clamps 20, 22. Each opening 6, 8 comprises one such resilient clamp 20, 22. The resilient clamps 20, 22 may be made of a suitable synthetic, electrically insulating material, as will become apparent from figures 3a, 3b.

The housing 11 accommodates a transformer 10 to transform electrical power received from the mains to electrical power to charge a battery accommodated in glasses temples (cf. figures 2 and 3). Such a battery is arranged to provide electrical power to electrical equipment in such glasses temples or in other parts of glasses associated with such glasses temples. The housing 11 is connected to one side of a cable 2 that is, at its other side, connected to a plug 4 designed to be connected to the mains. In an alternative embodiment, the transformer 10 is located outside the housing 11 and connected to the electrical contacts 3, 5, 7, 9 by suitable wiring.

The cradle 1 may comprise a processor 16 connected to the transformer 10 to receive electrical power and arranged to communicate, either wirelessly or via a cable, with external devices. It's possible use will be explained in more detail in the section "updating hearing aid software". To that end, the cradle 1 may, in addition to or instead of the processor 16, also comprise a transceiver 18 for communication with external devices, e.g., by means of Bluetooth. The transceiver 18 is also connected to the transformer 10 for receiving electrical power.

In an embodiment, the housing 11 comprise lights 12, 14 in, or close to, the openings 6, 8. They may be electrically connected to processor 16 such that processor 16 controls them to provide light when no temple of glasses is positioned in the opening 6, 8. Locating the lights 12, 14 in, or close to, the openings 6, 8 facilitates finding the openings 6, 8. This facilitates inserting the temples for a user, as he/she does not wear his/her glasses while inserting, and as it might be dark (the recharging may take place at night). Moreover, these lights 12, 14 may be controlled by the processor 16 to indicate other operation states like at least one of charging, charging complete and no-connection between temple contacts and electrical contacts 3, 5, 7, 9. The lights 12, 14 are preferably made of light emitting diodes (LED's). Different colors or different lighting patterns may be used to indicate different operation states.

Figures 2a, 2b show an embodiment of a back portion of a glasses temple 13. Figure 2 a shows the back portion in its assembled state whereas figure 2b shows the back portion with taken away cover member. As shown in figure 2a, the glasses temple 13 has a rear side portion 17 that is connected to a cover member 15. The cover member 15 can be removed from the rear side portion 17. The rear side portion 17 is provided with two electrical contacts 19, 21. Between the cover member 15 and the rear side portion 17, there is a hollow space for accommodating a battery 70 (see figure 2b) for providing electrical power to electrical components in the glasses temple 13 (or in other portions of the glasses). The electrical components may be part of a hearing aid. The electrical contacts 19, 21 are connected to respective contact pads 26, 28 within rear side portion 17, which are arranged to contact different electrical poles of battery 70. Two other contacts (not shown) connect the electrical poles of the battery to the electrical components. Preferably, the cover member 15 is located at an inside of the glasses temple 13, i.e. the side of the glasses temple 13 intended to face a head of a user of the glasses. This way, the cover members 15 are less visible when the user wears the glasses. Moreover, this is ergonomically better because a human head contour bends inwardly behind the ear and the glasses temple-inside thus follows the shape of the head. During fitting, at the optician, glasses are normally bent behind the ears towards the head, which with this design is not or less needed. The electrical contacts 19, 21 are preferably located at a rear side of the rear side portion 17. They may be provided on cover member 15 instead. Figure 2a shows a screw (or bolt) 72 used to attach the cover member 15 to the rear side portion 17.

Figure 2b shows the rear side portion 17 without the cover member 15. This figure shows that the rear side portion 17 has a space to accommodate a battery 70. It also shows the contact pads 26, 28. Moreover, it shows a hole 74 for receiving the screw 72.

Preferably, the rear sides of the cover 15 and the rear side portion 17 are circularly shaped such that the charging cradle 1 can accommodate a wide range of different glasses models. A circular shape facilitates electrical contact between respective electrical contacts 19, 21 and 3, 5 (7, 9). This is further explained with reference to figures 3a, 3b.

Figures 3a, 3b show two different examples of a glasses temple 13 placed in opening 6 of charging cradle 1. Same reference numbers refer to same components as in earlier figures. Figures 3a, 3b show the charging cradle 1 in cross section along a line III-III in figure 1. The clamp 20 (as well as the clamp 22) within opening 6 of charging cradle 1 is, preferably, shaped to receive and clamp a back portion of a glasses temple 13. In that clamping condition, the electrical contacts 3, 5 contact electrical contacts 19, 21, respectively. To that end, clamp 20 may be semi-circularly shaped and resilient, as shown. However, other mechanical designs may be used instead.

By making the electrical contacts 19, 21 rather long, these electrical contacts 19, 21 will contact the electrical contacts 3, 5 on the clamp 20 when the back portion of the glasses temple 13 is inserted into the clamp 20 under a wide variety of angles α. By designing clamp 20 and opening 6 in such a way, the charging cradle 1 is able to receive rear side portions 17 with cover members 15 under a wide range of angles α, as is shown in figures 3a, 3b. The clamp 22 with its electrical contacts 7 and 9, respectively, is preferably similarly shaped as clamp 20 with its electrical contacts 3 and 5, respectively.

Preferably, cover members 15 and rear side portions 17 of a left and right glasses temple 13 are shaped in a mirror symmetry such that the cover members 15 only fit to one of rear side portions 17.

Preferably, the opening 6, 8 of the charging cradle 1 have a width that becomes smaller the closer to the clamp 20, 22. Figure 3c, which is a cross sectional view along line IIIc-IIIc in Figure 1, shows this for opening 6. Such a tapered width supports easy insertion of temple 13 into opening 6.

### Connector assembly.

In the case that the glasses with electronics comprise a hearing aid, sound, either as an acoustic or as an electrical signal, has to be directed from the glasses to a human ear through the use of an intermediate unit, e.g., a tube or cable attached to an earpiece. Existing hearing aid glasses have the disadvantage that the earpieces are difficult to put into the ear, as a turning movement of the earpieces is required during insertion, while the earpieces are tightly attached to the glasses. The same problem exists when taking the earpieces out. However in this case an extra risk exists, which is that the user takes off his glasses first without thinking about the attached earpieces. In such case, at best an unpleasant pulling sensation is felt in the ear(s), and at worst the connection between earpiece and glasses breaks.

The objective of this aspect of the invention is to use a connector assembly that disconnects when the user puts off his/her glasses, and is easily connected by the user when he/she puts the glasses on. The advantages of the invention are that the insertion and extraction of the earpieces now can be done independently of putting off/on the glasses, as the glasses are not connected during insertion and extraction of the earpieces, and furthermore the risk of breakage of the intermediate unit in case of inadvertently putting off the glasses does not exist anymore. This will be explained in detail below.

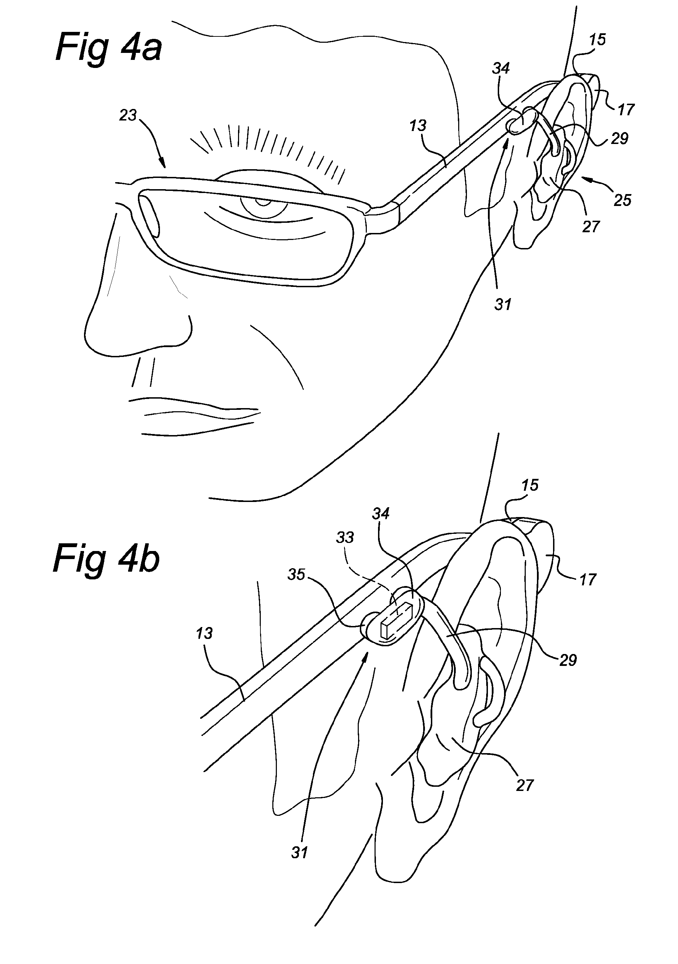

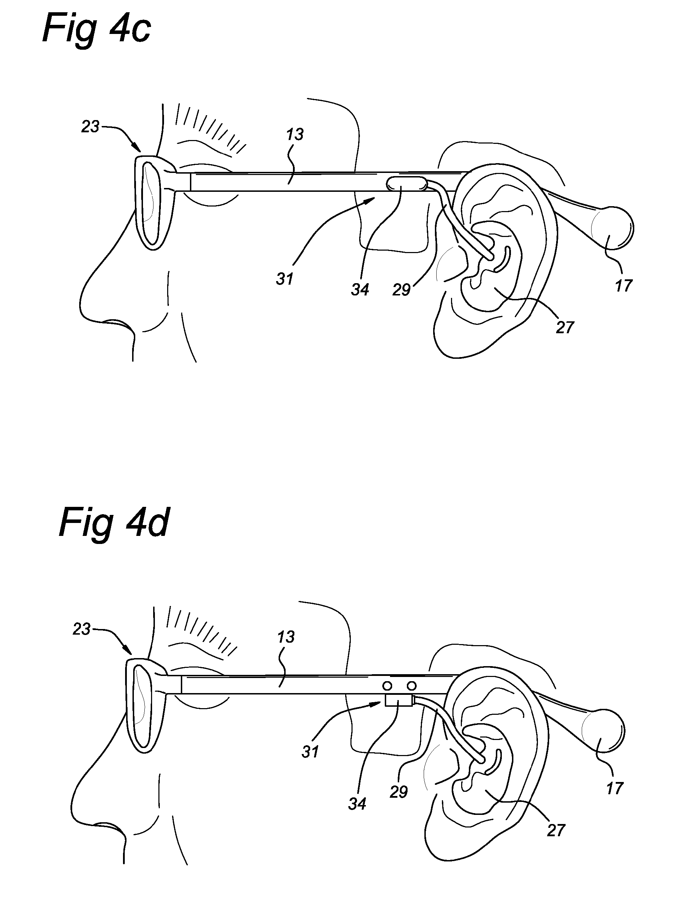

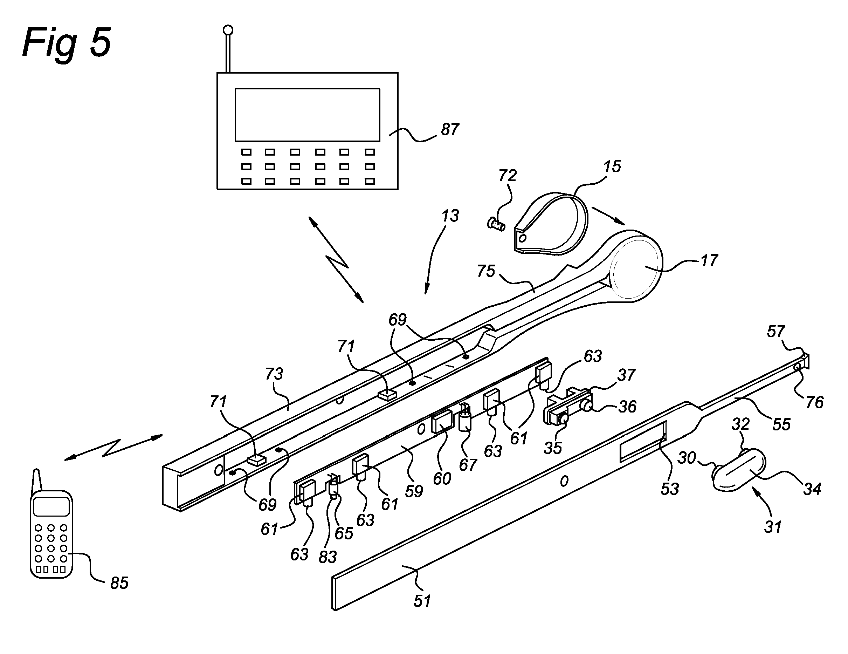

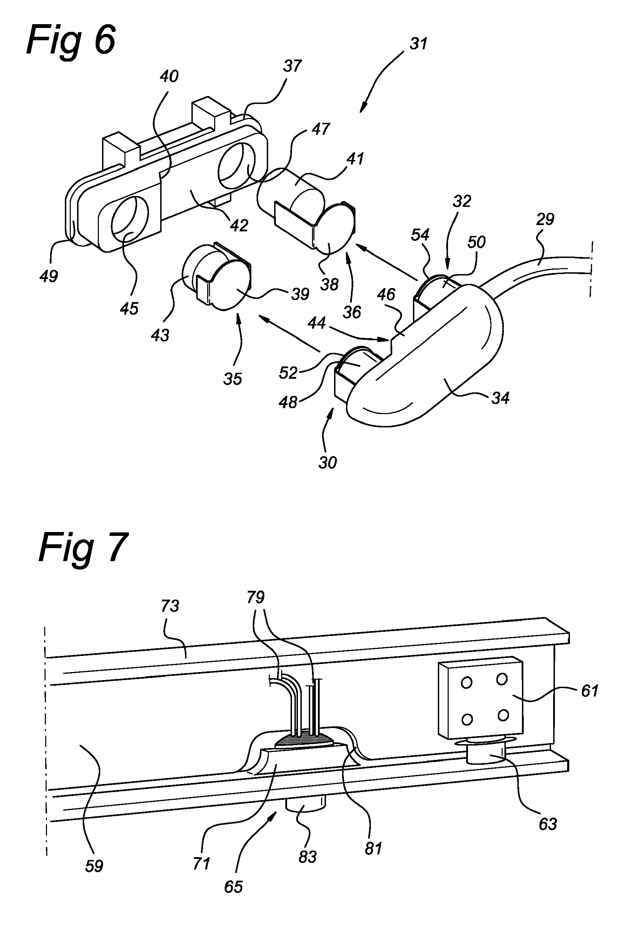

Figures 4a-4f show different embodiments of a connector assembly 31 used to connect an earpiece 27 of a hearing aid to temple 13 of glasses 23. The connector assembly 31 comprises first and second housings 34, 37. The first housing 34 is attached to the earpiece 27 and is shown in all figures 4a-4f. Second housing 37 is shown in figures 5 and 6. Second housing 37 does not need to be a separate component, but can be part of the temple 13, in which case the shape of the second housing 37 is for example milled into temple housing 73, or formed during the injection molding of temple housing 73.

The earpiece 27 comprises a speaker (not shown) to transmit sound to an ear of the user. To that end, the earpiece 27 receives suitable input signals from hearing aid components located in the temple 13 (or in other parts of glasses 23). Those input signals are transmitted via wires in a suitable cable 29 that is attached, at one end, to the first housing 34 and, at an opposing end, to the earpiece 27. The first housing 34 can be connected to and disconnected from the second housing 37 in the temple 13 as will be explained hereinafter.

In an alternative embodiment, the earpiece 27 does not comprise a speaker but comprises a hollow channel to lead sound received from a hollow tube, or any other hollow intermediate unit, to the ear. In that embodiment, such a hollow tube substitutes the cable 29. Then, the speaker is e.g. present in the first housing 34 or, alternatively, in the second housing 37 in temple 13. The sound produced by that speaker is then transmitted to the ear via the hollow tube. Figure 4b shows such a speaker 33 in first housing 34 in a very schematic way.

In a further alternative embodiment, the speaker is present in the temple and is transmitting sound via such a hollow tube that is attached to the temple 13. Then, first housing 34 is located at the end of the hollow tube and is pushed into the earpiece to connect.

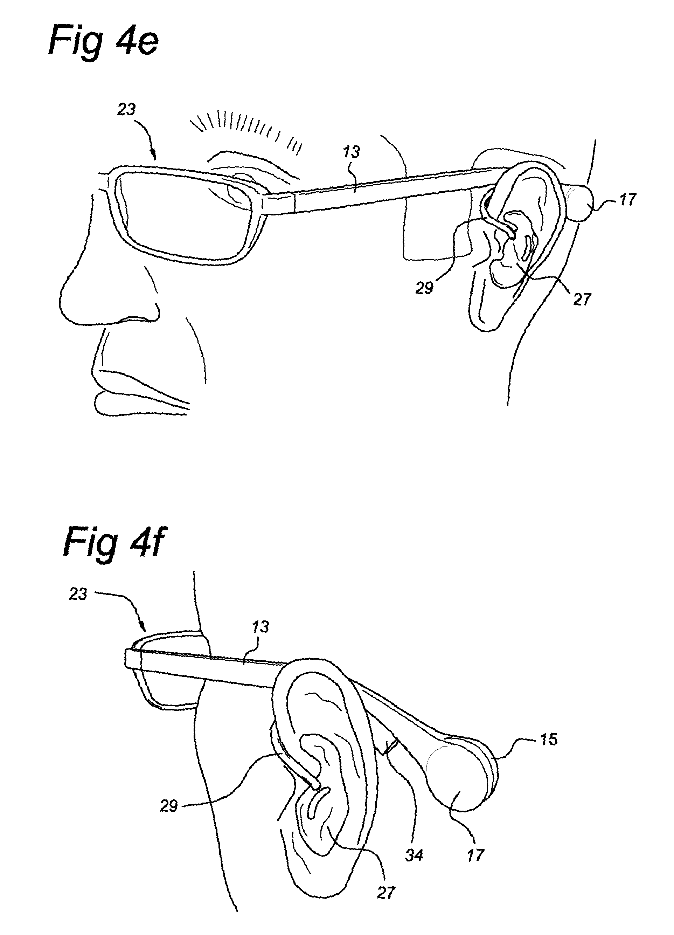

Figures 4a-4c show an embodiment in which the first housing 34 is to be connected to an outside of the temple 13 that, in use, faces away from the head of the user. Figure 4d shows an embodiment in which the first housing 34 is connected to a bottom side of temple 13 that, in use, faces downwards (i.e. to the ground). Figures 4e, 4f show an embodiment in which the first housing 34 is also connected to the bottom side of temple 13 that, in use, faces downwards, however, at a position that, in use, is behind the user's ear. In this latter embodiment, the cable 29 (or hollow tube) remains clamped behind the user's ear even when the user has disconnected the temple 13 from the first housing 34. This is more convenient than in the embodiments of figures 4a-4d where the cable 29 (or hollow tube) is dangling in the air when it is disconnected from the temple 13.

In all embodiments of figures 4a-4f, the connector assembly 31 is designed such that the cable 29 (or hollow tube) by means of the first housing 34 can be easily connected to and disconnected from the temple 13, e.g., such that the first housing 34 connects with only a little help of the user and disconnects substantially automatically when the user uses a little force when putting of his/her glasses.

The first and second housings 34, 37 may comprise magnets as shown in figures 5 and 6 in more detail. However, other arrangements of housings that can be easily connected and disconnected are envisaged, like housings with a mechanical snapping connection.

Figure 5 shows connector assembly 31 with first housing 34 and second housing 37. The second housing 37 is to be accommodated by the temple 13 as will be explained further below. The second housing 37 is preferably made of a synthetic material. As shown in more detail in figure 6, the second housing 37 has a connecting face 40 to be directed to the first housing 34 in order to engage the first housing 34. The connecting face 40 has a recess 42 and first and second openings 45, 47. Moreover, the second housing has an edge 49 the purpose of which will be explained below.

The first opening 45 is designed to accommodate a first contact member 35 whereas the second opening 47 is designed to accommodate a second contact member 36. The first contact member 35 comprises a first magnet 43 covered by a first metal contact plate 39. The second contact member 36 comprises a second magnet 41 covered by a second metal contact plate 38. In its assembled state, the contact plates 38, 39 are connected to suitable conductors (not shown) within the temple 13. These conductors are connected to other hearing aid components in the temple 13 for transporting suitable electrical sound and control signals etc.

The first housing 34 has a connecting face 44 to be directed to and engage the second housing 37. The connecting face 44 has an extending portion 46 that is designed to fit into recess 42 of second housing 37 when first and second housings 34 and 37 are engaging one another. The first housing has a third contact member 30 and a fourth contact member 32. The third contact member 30 comprises a third magnet 48 and an electrical contact 52. The fourth contact member 32 comprises a fourth magnet 50 and a fourth electrical contact 54. The third and fourth magnets 48, 50 are made of a suitable magnetic metal that is attracted by the first magnet 43 and second magnet 41, respectively. In the embodiment where the earpiece 27 has a speaker, the third and fourth electrical contacts are connected to suitable conductors within cable 29 that are connected to such a speaker.

If the first housing 34 comprises such a speaker (cf. figure 4b, where a speaker 33 is shown in connector assembly 31 and is attached to a hollow tube the third and fourth electrical contacts provide electrical sound and control signals to such a speaker. The speaker, then, produces sound that is transported via the tube to the earpiece 27.

If the second housing 37 or the temple 13 comprises a speaker no electrical signals need be transported to the first housing and the electrical contacts 38, 39, 48, 50 can be omitted. The third and fourth contact members 30, 32 need only engage the opposing first and second contact members 35, 36, respectively. Of course, the first and second housings 34, 37 must, then, be designed to allow sound to pass from such a speaker via the tube to the earpiece 27.

In an alternative embodiment, only one of the contact members 35, 36 is provided with a magnet, e.g., only first contact member 35 has first magnet 43 and second contact member 36 has an electrical contact 38 wrapped around a magnetically sensitive but non magnetic material, such as iron. This prevents the second housing 37 from attracting metal parts like chains and iron filings that, when engaged by both first and second magnets 43, 41 cause an electrical short circuit. Another solution would be to provide both the first and second housing 34, 37 with one magnet only.

Magnets can be provided such that first and second magnets 43, 41 are facing outward to first housing 34 with different magnetic poles, whereas third and fourth magnets 48, 50 can also be provided with different poles such that first contact member 35 is attracted by third contact member 30 and second contact member 36 by fourth contact member 32. Then, automatically a correct orientation of the first and second housings 34, 37 relative to each other is guaranteed.

By providing this connector assembly 31 with at least one magnet 41, 43, 48, 50 the first and second housings 34, 37 can be easily connected and disconnected while applying only a small force. This can be further facilitated by providing a rather stiff and only slightly flexible cable 29 (hollow tube). Such a cable 29 (hollow tube) can be made of a synthetic material that can be custom formed. Then, when the user disconnects the first housing 34 from the second housing 37 by putting off his/her glasses the first housing 34 will remain substantially in its place, thus, facilitating connecting first and second housings 34, 37 when the user puts on his/her glasses again because they will be very close to one another. Using opposing magnet pole combinations further facilitates reconnection since the first and second housings 34, 37 will then attract one another automatically in the proper orientation and direction.

### Temple.

In a further aspect, the invention relates to a glasses temple arranged to accommodate electronic equipment. In an example, such electronic equipment is part of a glasses hearing aid. However, this aspect is not restricted to such an application. This aspect can also be applied to electronic equipment for other applications, like a headset for a mobile device such as a mobile telephone or personal digital assistant (pda). Below, by way of example only, this aspect will be explained in more detail with reference to its application in a glasses hearing aid.

Glasses temples of high quality can be fitted by the optician to the user's head. To this end, usually, the temples are made of metal, or of plastic with a metal pin inside the plastic. The metal part is required to make sure the plastic after bending does not return to its original form.

Glasses temples that contain electronics require protection that prevent a cavity with electronic equipment being bent, as bending of the electronic equipment harms the electronic equipment.

The objective of this aspect of the invention is to solve this apparent paradox of required bending for fitting and prohibited bending for electronic equipment protection. To this end, a metal plate is attached as protection to a plastic temple enclosing electronic equipment. Only behind the ear, the metal plate decreases in height and becomes a metal pin that can be bent during fitting behind the ear. This will be explained with reference to figure 5.

Figure 5 shows several constructive details of a temple 13. Some of these details have already been explained above and will not be repeated here.

Figure 5 shows a printed circuit board (pcb) 59. The pcb 59 comprises several microphones 61. Four microphones 61 are shown on the pcb 59. However, this number may differ. The microphones 61 have an extension 63 in use facing downward. However, these extensions 63 may face another direction. The extensions 63 are provided with an opening for receiving sound to enable the microphones 61 to receive the sound and convert the received sound into a suitable electric sound signal. These electric sound signals are supplied to a processor arrangement 60 also connected to the pcb 59. The pcb 59 is also connected to one or more switches 65 to be operated by the user or an operator. In order to allow somebody to operate the switch 65, the switch 65 is provided with a button 83. Moreover, the pcb 59 may be connected to a socket 67 arranged to be connected to a mating plug of a cable (not shown) that can, e.g., be connected to a communication device like a computer. The switch and the socket are connected to the processor arrangement 60. All connections between the electrical components on the pcb 59 are provided via suitable electrically conductive tracks as is known to persons skilled in the art.

The processor arrangement 60 comprises suitable memory, like EEPROM, ROM, RAM, etc. For the sake of simplicity this has not been shown in figure 5.

The temple 13 has a metal plate 51. In one embodiment, the metal plate 51 is provided with an opening 53 for receiving the second housing 37. The size of opening 53 may be selected such that, in assembled form, it abuts the edge 49 (cf. figure 6). At its rear side, the metal plate has a narrowed portion 55, e.g., pin-shaped, that can be bent easily. At its terminating portion 57 the metal plate 51 may widen again. At its rear side, the metal plate 51 comprises a hole 76 for receiving the screw 72. The screw 72 is shown in figure 2a. In the embodiment shown, the screw 72 attaches the metal plate 51 to the cover member 15 and clamps the rear side portion 17 of the glasses temple 13 in between.

The temple 13 comprises a temple housing 73. The temple housing can be made of injection molded plastic. Alternatively, the material can be a millable material such as plastic or metal. The temple housing 73 is provided with suitable spaces to accommodate both the pcb 59 and the metal plate 51. The pcb 59 is preferably located in a space defined by the temple housing 73 and the metal 51 such that it is covered against external influences. Moreover, the space accommodating the pcb 59 is preferably designed large enough such that the temple 13 may bend slightly under external forces without bending the pcb, thus reducing risk of damaging the pcb 59 as much as possible. This risk is further reduced by the metal plate 51 since it has a relatively large height at the location of the pcb 59 which counteracts any tendency to bend. In this embodiment, metal plate 51 forms an outside wall of the temple 13. The metal plate 51 can be clamped by suitable rims of the first temple housing 73 Alternatively, the first temple housing 73 can be screwed to the metal plate 51, using suitable screws and screw sockets. Moreover, the metal plate 51 can be fixed to the temple housing 73 by a suitable glue.

In another embodiment, a metal strip is attached to the inside of the metal plate 51, thus forming a T profile to even further prevent bending of the metal plate 51 and thus of the temple 13.

In another embodiment, the temple 13 is injection molded, and exists of a single part comprising two sides of the temple housing with a fold line in the middle. During manufacturing, the single part is arranged around the pcb 59 with the electronic equipment and folded together. Then, it is closed with for example glue or lasering, or heat to exactly enclose the electronics and form the temple. In this case, a metal pin may be included in the cavity between the two plastic sides for extra electronics protection.

The narrowed portion 55 of the metal plate 51 fits into a narrowed portion 75 of the temple housing 73. Together with the narrowed portion 75 of temple housing 73, the narrowed portion 55 of the metal plate 51 can be bent easily in order to fit the temple 13 to a human head, behind the ear, (cf. figures 4a-4f) and ensures that after bending the (plastic) temple housing 73 does not return to its original form.

In an embodiment, the narrowed portion 55 of the metal plate 51 and the narrowed portion 75 of the temple housing 73 both have a bent shape, so that little bending has to be done in production and by the optician during fitting of the glasses. This protects electronic equipment.

At its rear side, the temple housing 73 comprises first and second battery contacts 26, 28. The battery contacts 26 and 28, respectively, are connected to electrical contacts 19 and 21, respectively (cf. figure 2). The battery contacts 26, 28 are designed to contact a battery (not shown). Two other contacts connected to the poles of the battery are connected to the electrical components on the pcb 59 by suitable conductors (not shown).

The temple housing 73 is provided with suitable holes 69 at its bottom side to receive microphone extensions 63. Moreover, the temple housing 73 comprises suitable holes 71 for receiving switch 65 and socket 67 such that the switch 65 extend through the housing wall and can be operated from outside. Preferably, the temple housing 73 and its holes 69 are designed such that the extensions 63 of the microphones 61 on the pcb 59 can be placed into these holes 69 by a tilting movement, thus limiting the height of the space required for the pcb 59 and thus the height of the temple 13, improving the visual attractiveness of the glasses. During manufacturing, first the socket 67 and the switch 65 may be connected to the pcb 59 by means of relatively long wires. Then, the socket 67 and the switch 65 may be inserted in respective holes 71 and pushed outward. After the pcb 59 has been placed by means of the tilting movement, the socket 67 and the switch 65 may be shifted back into the holes 71 after which they will be fixed, e.g., by gluing.

Figure 5 shows a mobile telephone 85 and a personal digital assistant (pda) 87. In an embodiment, the processor arrangement 60 on the pcb 59 is arranged to communicate with such a mobile telephone 85 or pda 87 (or another communication device), eg., by Bluetooth or other wireless communication protocols.

Figure 7 shows a detail of pcb 59 on an enlarged scale. The same reference numbers are used for the same components as in figure 5. One microphone 61 is shown with its extension 63 inserted into an opening 69 in temple housing 73. The switch 65 and button 83 are rather large. In order to minimize the depth of the space for the electronics and thus of the temple 13, improving the visual attractiveness of the glasses, the switch 65 extends into a notch 81 in pcb 59. The switch 65 is shown to have contact leads 79 connected to the pcb 59 where they contact conducting tracks, as will be apparent to persons skilled in the art. Those tracks are connected to processor arrangement 60.The switch 65 has a button 83 protruding from the temple housing 73 and arranged to be operated by a user or operator.

The socket 67 that is not shown in figure 7 and may also have a substantial size, may, like switch 65, also be accommodated in a notch, like notch 81, in pcb 59.

### User interface.

The user interface comprises the switch 65. Preferably, the switch 65 is intended to be operated by the wearer of the glasses and located at the front side of the temple 13 where "front side" is defined as the side where the temple is connected to the portion of the glasses 23 designed to accommodate the lenses. This is where the wearer normally puts his/her fingers to put on or to put off his/her glasses. So, this is a convenient location for the wearer to operate the button 83 of the switch 65. The switch 67 is intended to be operated by a hearing aid dispenser and can be located more to the rear side of the temple 13, i.e., the side to be put on the human ear.

Both temples of the glasses 23 can be provided with two (or more) such switches 65. However, in an embodiment, each temple may have just one switch, one to be operated by a wearer and one to be operated by the hearing aid dispenser. This is a feasible option if the glasses comprise a single processor arrangement 60 common to both temples, or if both temples are wirelessly connected. Then, manufacturer, i.e. default, settings of this single processor arrangement 60 can be adjusted by the hearing aid dispenser via a single switch on one of the temples where the other switch is used by the wearer to adjust user settings of the hearing aid like gain, directivity or beam forming for both ears.

The processor arrangement 60 that is connected to the switch 65 is arranged to receive a signal from these switch 65, indicating how long the button 83 is pushed by the user/operator. In an embodiment, three different operating modes can be distinguished:
1. short push
2. long push
3. very long push

The short push may take e.g. between 0 and 0.5 sec., the long push may e.g. take between 0.5 and 2 sec. whereas the very long push may e.g. take longer than 2 sec. Of course, other examples are possible. By operating the button 83 in the short push mode, the user/operator instructs the processor arrangement 60 to jump through consecutive programs like directivity, beam forming, volume, and telecoil. By operating the button 83 in the long push mode, the user/operator may instruct the processor arrangement 60 to search a certain setting within the selected program, or it may just select a specific program. By operating the button 83 in the very long push mode, the processor arrangement 60 is, e.g., instructed to reset all settings back to the manufacturer default settings, or to reboot, or to shut down.

The program "directivity" determines the main hearing direction or directions of the hearing aid. The hearing aid can, e.g., be programmed to have a single main hearing direction for both temples, extending substantially parallel to the temples in use, i.e., when the glasses are worn by the user and the temples are supported by the human ears. Alternatively, the hearing aid may have two different main hearing directions, i.e., one main direction per temple and per ear. These two different main directions may form opposing angles to the direction in which the temples extend. Such a plurality of different main directions of hearing aid glasses is explained in detail in European patent application EP-A-1 025 744 which is incorporated herein by means of reference.

Setting a suitable gain volume can in one embodiment be done by the long push mode. The gain is adapted by a predetermined amount after each long push. The volume may, e.g., be adjustable in 3 steps. Each time the user pushes long, the volume makes one increasing step. When the volume has reached a maximum level the steps will be reversed, i.e., the volume will be decreased in steps. When the volume has reached a minimum level, the steps are reversed again, etc.

The telecoil program relates to functionality of the hearing aid to receive radio waves from a transmitter in, e.g., a theater or concert hall, that include the sound produced at that moment in the theater / concert hall such that the user of the hearing aid can better listen to, e.g., a theater play. In one embodiment the telecoil program can be selected or deselected by applying the long push mode.

Adapting settings of the programs to be executed by the processor by the hearing aid dispenser can be performed in the same way.

### Updating hearing aid software.

In an embodiment, the invention relates to updating hearing aid software. Now, a description of updating hearing aid software will be given. The hearing aid may comprise functional modules as explained in detail in W02004/028203. However, other types of hearing aids may be used instead.

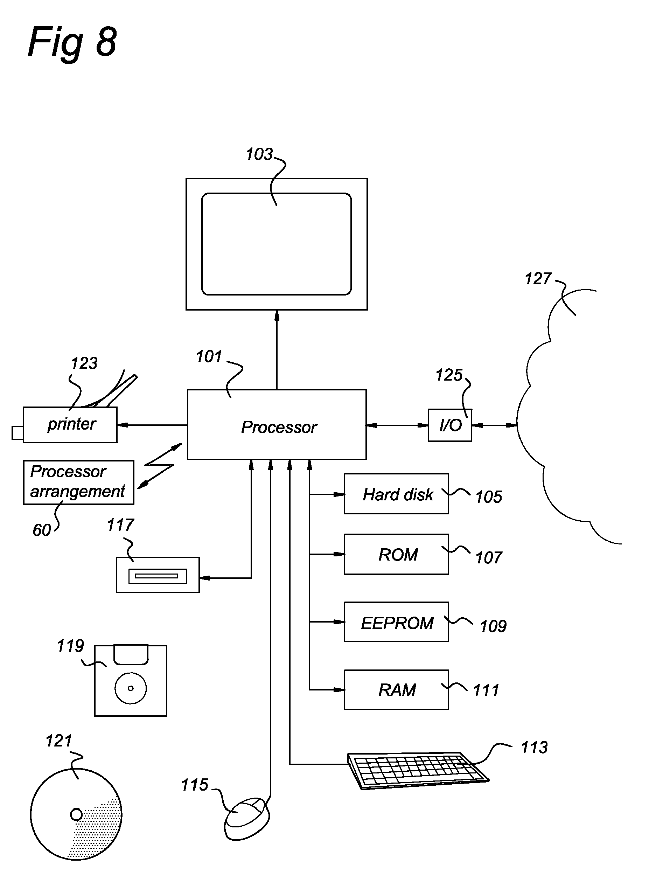

The functionality of a hearing aid is preferably implemented by software. Once a hearing aid has been bought and time passes by, this software will become outdated. The present invention, in an embodiment, provides for a suitable way of keeping the software as up to date as possible. Basically, this can be done by means of a computer arrangement as shown in figure 8.

In figure 8, an overview is given of a computer arrangement that can be used to carry out the method according to the invention. The arrangement comprises a processor 101 for carrying out arithmetic operations.

The processor 101 is connected to a plurality of memory components, including a hard disk 105, Read Only Memory (ROM) 107, Electrically Erasable Programmable Read Only Memory (EEPROM) 109, and Random Access Memory (RAM) 111. Not all of these memory types need necessarily be provided. Moreover, these memory components need not be located physically close to the processor 101 but may be located remote from the processor 101.

The processor 101 is also connected to means for inputting instructions, data etc. by a user, like a keyboard 113, and a mouse 115. Other input means, such as a touch screen, a track ball and/or a voice converter, known to persons skilled in the art may be provided too.

A reading unit 117 connected to the processor 101 is provided. The reading unit 117 is arranged to read data from and possibly write data on a data carrier like a floppy disk 119 or a CDROM 121. Other data carriers may be tapes, DVD, memory sticks etc,. as is known to persons skilled in the art.

The processor 101 is also connected to a printer 123 for printing output data on paper, as well as to a display 103, for instance, a monitor or LCD (Liquid Crystal Display) screen, or any other type of display known to persons skilled in the art.

The processor 101 may be connected to a communication network 127, for instance, the Public Switched Telephone Network (PSTN), a Local Area Network (LAN), a Wide Area Network (WAN), the Internet, etc. by means of an I/O device 125. The processor 101 may be arranged to communicate with other communication arrangements through the network 127.

The processor 101 may be implemented as stand alone system, or as a plurality of parallel operating processors each arranged to carry out subtasks of a larger computer program, or as one or more main processors with several subprocessors. Parts of the functionality of the invention may even be carried out by remote processors communicating with processor 101 through the network 127.

The processor is arranged to communicate with the processor arrangement 60 accommodated in temple 13, e.g. wireless or through a cable connected to the socket 67 in the temple 13.

The computer arrangement shown in figure 8 may be located at the premises of a wearer of the hearing aid glasses. Alternatively, it may be located at the premises of a hearing aid dispenser who sells such hearing aid glasses to end-users. The computer arrangement may be used to update the programs to be executed by processor arrangement 60 in different ways.

The computer arrangement shown in figure 8 may be arranged, as controlled by suitable software instructions and data stored in memory 105-111, to download updates of software programs (or version parameters) from a server that stores latest software / parameters from a manufacturer of hearing aids, that can be executed by the hearing aid glasses processor arrangement 60. Moreover, processor 101, as controlled by other suitable software instructions and data stored in memory 105-111, is then arranged to communicate such updated software programs or parameters to the processor arrangement 60 once a communication link is established between the processor 101 and the processor arrangement 60. This setup can be used both in a home environment of an end-user or at the premises of a hearing aid dispenser who sells hearing aid glasses. The updated software and/or parameters can be downloaded by computer arrangements from a website that is controlled by, e.g., a manufacturer of hearing aid glasses. The updated software and/or parameters can be distributed automatically to such computer arrangements upon any new release, e.g., on a subscription basis at any time that the computer arrangement is connected to the Internet.

In a very advantageous embodiment, the hearing aid dispenser does not need to download updated versions of the software and/or parameters. In such an embodiment, the processor 101, as controlled by suitable instructions and data stored in memory 105-111, is arranged to communicate with processor arrangement 60 of hearing aid glasses and to check the version number of the software running on the processor arrangement 60, or of the parameters used by the software running on the processor arrangement 60. Moreover, the computer arrangement as shown in figure 8 stores software and parameters with a certain version number itself in memory 105-111. The processor 101 checks whether the version number of the software / parameters on the processor arrangement 60 is more recent than the version number of the software / parameters stored in memory 105-111. If the version number of the software / parameters stored in memory 105-111 is more recent than the version number of the software / parameters stored in processor arrangement 60, then, this stored software / parameters is / are transmitted to the processor arrangement 60 and used by the processor arrangement 60 to update its own software / parameters. In case the version number of the software / parameters stored in memory 105-111 is older than the version number of the software / parameters stored in processor arrangement 60, then, this software /parameters of the processor arrangement 60 are transmitted to the processor 101 and stored by the processor 101 in its own memory 105-111. The processor 101 can then later use the updated software / parameters to update other hearing aid glasses when they are arranged to communicate with the processor 101 to find out whether it has more recent software / parameters. This setup is especially advantageous for hearing aid dispensers. They can, thus, keep their software / parameters for the hearing aid glasses reasonably up to date. In practise, they will be visited by hearing aid glasses wearers regularly for different consultant purposes and, in this way, they can use the hearing aid glasses of those wearers to update their software and/or parameters. Secondly it is advantageous for the glasses manufacturer. The manufacturer does not have to wait with the introduction of an improvement in newly produced glasses until all dispensers have updated their fitting software. Instead the manufacturer can immediately introduce software and/or parameter improvements in newly produced glasses, which will spread automatically to the software of the hearing aid dispenser. The fast introduction of improvements of course benefits the user as well.

In an alternative embodiment, the processor 101 does not communicate with processor arrangement 60 directly but with the cradle processor 16 (cf. figure 1). This cradle processor 16 is also arranged to communicate with the processor arrangement 60, e.g., via Bluetooth or through contacts in the temple 13 that connect to contacts in the cradle 1 when positioned in the cradle 1.

In an alternative embodiment, the processor arrangement 60 is connected to the transceiver 18 when the temple 13 is put into cradle 1 by suitable connecting members. Then, the processor arrangement 60 uses the transceiver 18 to communicate with external devices like processor 101, e.g. for updating it's software / parameters. The advantage is that the electrical power to communicate with external devices does not need to be derived from the battery within the temple 13 but can be derived from transformer 10 within cradle 1.

In a further alternative, another communication device like pda 87 or mobile telephone 85 is used for the updating process. They already have the equipment to communicate with other devices like processor 101, so, they can easily be programmed to download latest software / parameters from processor 101 and transmit this further to processor arrangement 60, either directly or via processor 16 / transceiver 18 in the cradle 1. Here, the hearing aid glasses can be a headset of such a communication device like pda 87, mobile telephone 85, as, e.g., explained in more detail in W02004/028203.

### Selling hearing aid glasses.

In a last aspect, the invention relates to a method of selling hearing aid glasses to clients. This method includes the following actions:
a) selecting by a client a selected hearing aid glasses frame from a set of hearing aid glasses frames;
b) providing said selected hearing aid glasses frame with lenses in accordance with a prescription relating to client's eyes deviations;
c) paying by the client of a fee that is substantially less than a total sales price of said hearing aid glasses;
d) after a trial period, checking whether the client is satisfied with the hearing aid glasses as bought, and:
   I. if so, debiting the total sales price less the fee to said client;
   II. if not, allowing the client to keep the glasses and disabling the hearing functionality of said hearing aid glasses or exchanging the temples that contain the electronics for normal temples, without returning said fee.

By using this method, potential clients are helped in deciding to try hearing aid glasses, which may cost a substantial amount of money. Clients only have to pay a fee during the trial period and are sure that they need not pay more should they be not satisfied with the hearing aid glasses due to whatever reason. They will only have to pay the full amount of the sales price of the hearing aid glasses when they decide to keep the functionality of the hearing aid.

The fee may be below 20% of the total sales price.

The advantage for the user is that, through the payment of the fee, he/she will at least receive a pair of nice looking glasses with lenses in accordance with his/her eyes' prescriptions.

The advantage for the manufacturer is that by receiving the fee the costs for producing prescription glasses for a user's trial period are covered.

## Claims

1. Connector assembly for connecting an earpiece (27) of a hearing aid to a glasses temple (13), the glasses temple (13) comprising hearing aid components, the connector assembly (31) comprising a first connector housing (34) and a second connector housing (37), the first connector housing (34) being designed to be attached to said earpiece (27) via an intermediate unit (29), the second connector housing (37) being designed either to be attached to, or to be part of said glasses temple (13), the first and second connector housings (34, 37) being designed to engage one another by means of a disconnectable connection.

2. Connector assembly according to claim 1, wherein said second connector housing (37) comprises at least one magnet (43; 41) and the first connector housing (34) comprises at least one further magnet (30; 32), said at least one magnet (43; 41) and said at least one further magnet (30; 32) being oriented to attract one another to connect said first and second connector housings (34, 37) to one another.

3. Connector assembly according to claim 1 or 2, wherein said second connector housing (37) comprises a first magnet (43) that is covered with a first electrical contact member (39).

4. Connector assembly according to claim 3, wherein said second connector housing (37) comprises a second magnet (41) that is covered with a second electrical contact member (38).

5. Connector assembly according to any of the claims 1-4, wherein said first connector housing (34) comprises a first set of two electrical contacts (52, 54) and the second connector housing (37) comprises a second set of two electrical contacts (38, 39), the first set (52, 54) and second set (38, 39) of electrical contacts being designed to contact one another in pairs of electrical contacts when said first connector housing (34) is engaged with said second connector housing (37), the first set of two electrical contacts (52, 54) being attached to wires in said intermediate unit (29) for transporting input signals to a speaker in said earpiece (27).

6. Connector assembly according to any of the claim 1-4, wherein said first connector housing (34) comprises a first set of two electrical contacts (52, 54) and the second connector housing (37) comprises a second set of two electrical contacts (38, 39), the first set (52, 54) and second set (38, 39) of electrical contacts being designed to contact one another in pairs of electrical contacts when said first connector housing (34) is engaged with said second connector housing (37), the first set of two electrical contacts (52, 54) being connected to a speaker (33) within said first connector housing (34), said speaker (33) being arranged to produce sound to be transported to said earpiece via said intermediate unit (29).

7. Connector assembly according to any of the claims 1-6, wherein said intermediate unit (29) is made of a material that can be custom formed.

8. Hearing aid arrangement comprising a first connector housing (34) that can be engaged with a second connector housing (37) arranged on a glasses temple (13), the first connector housing (34) being attached to one end of a intermediate unit (29) that has an other end attached to an earpiece (27), the first connector housing (34) being designed to be engaged with said second connector housing (37) by means of a disconnectable connection.

9. Glasses temple comprising hearing aid components, the glasses temple arranged to be attached to a first connector housing (34) of a hearing aid arrangement according to claim 8 by means of a second connector housing (37) arranged on the glasses temple (13).

10. Hearing aid glasses with a glasses temple according to claim 9.

11. Hearing aid assembly comprising a hearing aid arrangement according to claim 8 and hearing aid glasses according to claim 10.

12. A cradle set comprising a transformer (10) arranged to receive electrical power from a mains and transform said electrical power to battery charging power to charge a first chargeable battery and a cradle housing (11) comprising at least a first opening (6), the first opening (6) comprising a first electrical contact (3) and a second electrical contact (5), the first opening (6) being shaped to receive a rear side portion of a first glasses temple (13) and the first and second electrical contacts (3, 5) being designed to contact electrical contacts on said rear side portion of said first glasses temple (13) in order to provide said battery charging power to said first glasses temple (13).

13. The cradle set according to claim 12, wherein said first opening (6) comprises a clamp (20) designed to resiliently clamp said rear side portion of said first glasses temple (13).

14. The cradle set according to claim 13, wherein said clamp (20) is shaped like a circle arc portion and first and second electrical contacts (3, 5) are located on said clamp (20).

15. The cradle set according to claim 13 or 14, wherein said clamp (20) is arranged to receive said rear side portion of said first glasses temple (13) under different angles.

16. The cradle set according to any of the claims 12-15, wherein the cradle housing (11) comprises a cradle processor (16) arranged to communicate with other communication devices.

17. The cradle set according to any of the claims 12-16, wherein the cradle housing (11) comprises a transceiver (18) arranged to receive and transmit data.

18. The cradle set according to any of the claims 12-17, wherein the cradle set comprises at least one light (12, 14) in or near to the first opening (6).

19. The cradle set according to claim 18, wherein the at least one light (12, 14) comprises one or more light emitting diodes.

20. The cradle set according to claim 18 or 19, wherein the at least one light (12, 14) is connected to a processor arrangement (16) that is arranged to indicate different operation states of the cradle set via said at least one light, e.g., by different light colors or by different light patterns.

21. The cradle set according to any of the claims 12-20, wherein said cradle housing (11) comprises a second opening (8) comprising a third electrical contact (7) and a fourth electrical contact (9), the second opening (8) being shaped to receive a rear side portion of a second glasses temple and the third and fourth electrical contacts (7, 9) being designed to contact electrical contacts on said rear side portion of said second glasses temple in order to provide battery charging power to a second chargeable battery in said second glasses temple.

22. An hearing aid arrangement comprising a cradle set according to any of the claims 12-21 and hearing aid glasses, the hearing aid glasses comprises at least one glasses temple (13) comprising a rear side portion with electrical contacts for receiving battery charging power from set cradle set.

23. A glasses temple (13) comprising a printed circuit board (59) with electrical components (60; 61; 65; 67), a temple housing (73) and a metal plate (51), the temple housing (73) accommodating both said printed circuit board (59) and said metal plate (51), said metal plate (51) being arranged to protect said printed circuit board (59) with electrical components (60; 61; 65; 67).

24. The glasses temple according to claim 23, wherein said electrical components (60; 61; 65; 67) are hearing aid components.

25. The glasses temple according to claim 24, wherein said temple housing (73) comprises a first hole (69) and said hearing aid components comprise at least one microphone (61) with an extension (63) with an opening to receive sound, said temple housing (73) and printed circuit board (59) being designed such that said extension (63) can be put into said first hole (69) by a tilting movement.

26. The glasses temple according to claim 23, 24 or 25, wherein said temple housing (73) comprises a hole (69) and said electrical components comprise at least one switch (65) with a button (83) to be operated by a user, wherein said printed circuit board (59) comprises a first notch (81) to provide space within said temple housing (73) to accommodate said at least one switch (65).

27. The glasses temple according to any of the claims 23-26, wherein said printed circuit board (59) comprises a processor arrangement (60).

28. The glasses temple according to claim 27, wherein said printed circuit board (59) is provided with a socket (67) connected to said processor arrangement (60).

29. The glasses temple according to claim 28, wherein said printed circuit board (59) comprises a second notch (81) to provide space within said temple housing (73) to accommodate said at least one socket (67).

30. The glasses temple according to any of the claims 23-29, wherein said glasses temple (13) comprises a connector housing (37) to be connected by means of a magnetic force to a further connector housing (34) that is connected to a hearing aid earpiece (27).

31. The glasses temple according to claim 30, wherein said metal plate (51) comprises a hole (53) to accommodate said connector housing (37).

32. The glasses temple according to any of the claims 23-31, wherein said metal plate (51) comprises a narrowed portion (55) at a rear side of said glasses temple (13) that can be bent behind an ear of a user.

33. The glasses temple according to any of the claims 23-32, wherein said temple housing (73) comprises a space for accommodating a battery which space can be covered by a cover (15) with the cover positioned at a side of the temple facing a head of a user in use.

34. The glasses temple according to any of the claims 23-33, wherein said temple housing (73) has a circularly shaped rear side portion with two electrical contacts (19, 21) to receive electrical power to charge a battery for the electrical components.

35. Glasses comprising at least one glasses temple according to any of the claims 23-34.

36. Method of updating a hearing aid, comprising:
a) providing a computer with a computer processor (101) arranged to communicate with other telecommunication devices and storing a computer version of a hearing aid application program;
b) providing hearing aid glasses with a hearing aid processor (60) arranged to communicate with other telecommunication devices and storing a hearing aid glasses version of said hearing aid application program;
c) setting up a communication between said computer processor (101) and said hearing aid processor (60);
d) checking whether said hearing aid glasses version is a more recent version than said computer version of said hearing aid application program;
e) if said hearing aid glasses version is more recent than said computer version, transferring said hearing aid glasses version to said computer and to store said transferred hearing aid glasses version in said computer as an updated computer version;
f) if said computer version is more recent than said hearing aid glasses version, transferring said computer version to said hearing aid processor (60) and to store said computer version in said hearing aid processor (60) as updated hearing aid glasses version.

37. Method according to claim 36, wherein said action c) comprises setting up said communication between said computer processor (101) and said hearing aid processor (60) via an intermediate processor.

38. Method according to claim 37, wherein said intermediate processor is part of one of a mobile telephone (85), a personal digital assistant (87), and a cradle (1) arranged to charge a battery of said hearing aid.

39. Method according to any of the claims 36-38, wherein said computer is arranged to download said computer version via a telecommunication network (127).

40. A communication assembly comprising a computer and hearing aid glasses, arranged to perform together the method as claimed in any of the claims 36-39.

41. Method of selling hearing aid glasses to clients, comprising:
a) selecting by a client a hearing aid glasses frame from a set of hearing aid glasses frames;
b) providing said hearing aid glasses frame with lenses in accordance with a prescription relating to client's eyes deviations;
c) paying by the client of a fee that is substantially less than a total sales price of said hearing aid glasses;
d) after a trial period, checking whether the client is satisfied with the hearing aid glasses as bought, and:
• if so, debiting the total sales price less the fee from said client;
• if not, allowing the client to keep the glasses and disabling hearing functionality of said hearing aid glasses or exchanging electronics containing temples of said glasses for normal temples, without returning said fee.

42. The method according to claim 41, wherein said fee is below 20% of said total sales price.
